Europäisches Patentamt

European Patent Office

Office européen des brevets

(19)

(11) Veröffentlichungsnummer: **0 140 096 B1**

(12) **EUROPÄISCHE PATENTSCHRIFT**

(45) Veröffentlichungstag der Patentschrift: **19.12.90**

(51) Int. Cl.⁵: **G 02 B 1/10**

(21) Anmeldenummer: **84110896.2**

(22) Anmeldetag: **12.09.84**

(60) Verbunden mit 84903482.2/0155307 (europäische Anmeldenummer/Veröffentlichungsnummer) durch Entscheidung vom 21.10.88.

(54) **Reflexionsvermindernder Belag für ein optisches Element aus organischem Material.**

(30) Priorität: **12.09.83 DE 3332872**

(43) Veröffentlichungstag der Anmeldung:
**08.05.85 Patentblatt 85/19**

(45) Bekanntmachung des Hinweises auf die Patenterteilung:
**19.12.90 Patentblatt 90/51**

(84) Benannte Vertragsstaaten:
**AT BE CH DE FR GB IT LI LU NL SE**

(56) Entgegenhaltungen:
**AT-B- 300 401
DE-A-2 728 127
FR-A-2 511 047
US-A-4 168 113
US-A-4 246 043
US-A-4 387 960**

**PATENTS ABSTRACTS OF JAPAN, Band 7, Nr. 117(P-198)1262r, 21. Mai 1983; & JP - A - 58 35501**

(73) Patentinhaber: **Optische Werke G. Rodenstock
Isartalstrasse 43
D-8000 München 5 (DE)**

(72) Erfinder: **Melzig, Manfred, Dr.
Sonnenstrasse 11
D-8031 Wessling (DE)**
Erfinder: **Rösler, Horst
Am Katzenstein 7
D-8031 Wessling (DE)**
Erfinder: **Schöbl, Medardus
Bruckerstrasse 11a
D-8081 Landsberied (DE)**

(74) Vertreter: **Schiller, Walter, Dr. et al
Kanzlei Münich & Schiller Willibaldstrasse 36
D-8000 München 21 (DE)**

(56) References cited:
**PATENTS ABSTRACTS OF JAPAN, Band 8, Nr. 151(P-286)1588r, 13. Juli 1984, Seite 84P286; & JP - A - 59 48702**

EP 0 140 096 B1

**Beschreibung**

Die Erfindung bezieht sich auf einen reflexionsvermindernden Belag für ein optisches Element aus organischem Material gemäß dem Oberbegriff der Patentansprüche 1 bzw. 4 oder 5.

Ein reflexionsvermindernder Belag gemäß dem Oberbegriff des Patentanspruchs 1 ist beispielsweise aus der DE—A—22 10 505, der DE—A— 27 51 221 oder aus der US—A—4 196 246 bekannt. Die aus diesen Druckschriften bekannten reflexionsvermindernden Beläge weisen eine hochbrechende Schicht beispielsweise aus Aluminiumoxid ($Al_2O_3$) oder Chromoxid ($Cr_2O_3$) neben Schichten mit niedrigem Brechungsindex auf.

Aus der US—A—4 196 246 sind ferner Mehr-fachbeschichtungen für optische Elemente aus organischem Material bekannt, die neben Schich-ten aus $SiO_2$ hochbrechende Schichten aus Oxi-den von Cer, Indium, Lanthan, Titan oder Zirkon aufweisen.

Diese Schichten werden überlicher Weise durch reaktives Verdampfen der entsprechenden Metalle oder Metalloxide in einer Sauerstoffatmosphäre aufgebracht. Das reaktive Verdampfen kann zu einem nichtreproduzierbaren Schichtauf-bau führen, da die hochbrechende Schicht aufgrund der unterschiedlichen Oxide, die sich beim reaktiven Verdampfen ergeben können, sehr unterschiedliche Brechungsindices aufweisen kann. Auch können sich beim reaktiven Verdampfen Schichten mit Einlagerungen ergeben. Hierdurch wird ebenfalls die Qualität des reflexionsvermindernden Belags stark herabgesetzt.

Ein reflexionsvermindernder Belag gemäß dem Oberbegriff des Patentanspruchs 4 ist aus "Patents Abstracts of Japan, Bd. 7, Nr. 117, vom 21. Mai 1983" bekannt. Bei diesem reflexionsvermindernden Belag wird auf dem organischen Material zunächst eine $SiO_2$-Schicht mit einer Dicke von 0,05 λ bis 0,15 λ aufgebracht. Diese Schicht hat im wesentlichen die Aufgabe, Reflexionen an der Grenzfläche zu einer als Schutz-schicht dienenden $SiO_2$-Schicht zu vermeiden. Hierzu ist aus der optisch wirksamen $SiO_2$-Schicht eine Schicht aus einem hochbrechenden Metallo-xid, beispielsweise aus $Y_2O_3$, $Yb_2O_3$ oder $Al_2O_3$ und erste auf dieser Schicht die als Schutzschicht dienende $SiO_2$-Schicht aufgebracht.

Auf der als Schutzschicht dienenden, optisch nicht wirksamen $SiO_2$-Schicht ist dann erst der eigentliche reflexionsvermindernde Belag aufgebracht.

Ein derartiger Schichtaufbau hat den Nachteil, daß er vergleichsweise viele Schichten aufweist und damit aufwending herzustellen ist. Darüberhinaus kann die "dünne, optisch wirksame" $SiO_2$-Schicht Unebenheiten des organischen Materials kaum ausgleichen.

Aus der nicht vorveröffentlichten älteren deutschen Patentanmeldung P 33 35 557 ist eine Überzugsschicht für eines tark lichtbrechende Kunstharzlinse bekannt, auf der ein reflexionsvermindernder Belag aufgebracht werden kann, der unter anderem aus Yttriumoxide ($Y_2O_3$) bestehen kann. Gemäß dieser älteren Patentanmeldung ist zusätzlich eine organische Überzugsschicht vorgesehen, auf der eine anorganische Überzugsschicht und dann erst der reflexionsvermindernde Belag aufgebracht sind. Darüberhinaus wird Yttriumoxid gemäß der älteren Anmeldung in einer "Hochfrequenz-Plasmaatmosphäre" in Argongas aufgebracht.

Das Aufbringen des in dieser älteren Patentan-meldung beschriebenen Schichtaufbaus ist auf-grund der Verwendung einer "Hochfrequenz-Plasmaatmosphäre" kompliziert. Darüberhinaus ist aufgrund des Aufbringens einer zusätzlichen organischen Überzugsschicht ein weiterer Verfah-rensschritt erforderlich, der die Herstellungsko-sten zusätzlich erhöht.

Der Erfindung liegt die Aufgabe zugrunde, einen reflexionsvermindernden Belag gemäß den Oberbegriffen der Patentansprüche 1 bzw. 4 derart weiterzubilden, daß bei einfachem Schichtaufbau die hochbrechende Schicht reproduzierbar und kostengünstig herstellbar ist und darüberhin-aus leicht eine $SiO_2$-Schutzschicht verwendet werden kann.

Eine erfindungsgemäße Lösung dieser Aufgabe ist mit ihren Ausgestaltungen in den Patentansprüchen gekennzeichnet.

Gemäß Patentanspruch 1 weist der reflexions-vermindernde Belag mindestens eine hochbre-chende Schicht aus Erbiumoxid ($Er_2O_3$), Terbiu-moxid ($T_4O_7$), Dysprosiumoxid ($Dy_2O_3$) oder Hol-miumoxid ($Ho_2O_3$) auf. Schichten aus diesen Materialien sind bislang noch nicht für klar durchsichtige optische Elemente aus organischem Material, wie beispielsweise Brillengläser, verwendet worden.

Überraschenderweise können diese Schichten dadurch aufgebracht werden, daß die jeweiligen Oxide unter Sauerstoffabschluß aufgedampft werden. Dabei reduzieren sich diese Oxide nicht, so daß keine Metallteilchen in die aufgedampften Schichten eingelagert sind. Darüberhinaus können sich durch das Verdampfen unter Sauerstoffabschluß auch keine anderen Oxidformen bilden.

Druch dieses überraschenderweise mögliche nicht reaktive Aufbringen der Schichten erhält man immer einen konstanten und reprodizierbaren Brechungsindex.

Ein weiterer unerwarteter Vorteil dieser Oxide ist, daß sie auch dann, wenn sie bei niedrigen Substrattemperaturen aufgebracht werden, gut haften. Hierdurch sind sie gerade für reflexionsvermindernde Beläge von optischen Elementen aus organischem Material besonders gut geeignet, da derartige Elemente beim Aufbringen der Schichten nur wenig erwärmt werden sollten.

Die im Anspruch 4 gekennzeichnet Oxide von Samarium, Europium, Neodym und Ytterbium zersetzen sich beim Verdampfen unter Sauerstoffabschluß teilweise. Damit lagern sich in die aufgebrachte Schicht Metallteilchen ein, die die Absorption erhöhen. Damit können nicht reaktiv aufebrachte Schichten aus den im Anspruch 4 angegebenen Materialien nicht uneingeschränkt für hochbrechende Schichten verwendet werden, deren Dicke bis zu λ/2 beträgt.

Überraschenderweise hat es sich jedoch herausgestellt, daß nicht reaktiv aufgebrachte Schichten aus den in Anspruch 4 angegebenen Metalloxiden für Schichten mit einer Dicke etwa zwischen λ/10 und λ/20 brauchbar sind, und dann einen sehr gut reproduzierbaren Brechungsindex bei nicht ins Gewicht fallender Absorption liefern. Dabei haben diese Metalloxide, wie auch die anderen vorstehend angegebenen Metalloxide, en zusätzlichen Vorteil, daß sie bei niedrigen Substrattemperaturen aufgedampft werden können und unerwartet gut auf Siliziumdioxid haften, so daß sie sich besonders für reflexionsvermindernde Schichten von optischen Elementen aus organischem Material eignen.

Der im Anspruch 5 gekennzeichnete reflexionsvermindernde Belag weist eine Schicht aus Yttriumoxid auf.

In jedem Falle führt der Schichtaufbau gemäß den Patentansprüchen 4 und 5 zu einer besonders vorteilhaften reflexionsvermindernden Mehrfachbeschichtung, da die genannten Oxide auf Siliziumdioxid (SiO₂) unerwartet gut haften.

Diese gute Haftvermögen gilt auch für die im Anspruch 1 angegebenen hochbrechenden Schichten, so daß es gemäß Anspruch 2 besonders vorteilhaft ist, wenn diese Schichten ebenfalls auf SiO₂-Schichten aufgebracht werden.

Dieses gute Haftvermögen der Oxide auf Siliziumdioxid ist insbesondere dann von Vorteil, wenn das optische Element aus einem organischen Material besteht, auf dem die Oxide nur schlecht haften würden. Auch in diesem Falle läßt sich gemäß den Ansprüchen 3 bzw. 4 und 5 ein gut haftender reflexionsvermindernder Belag erzielen, wenn die direkt auf dem organischen Material aufgebrachte Schicht aus Siliziumdioxid besteht, auf der dann das jeweilige Metalloxid gut haftend aufgebracht wird.

In den Ansprüchen 6 und 7 sind besonders vorteilhafte Mehrfachbeschichtungen mit drei Schichten gekennzeichnet, die bei sehr einfachem Aufbau eine sehr gute Reflexionsverminderung haben. Der Aufbau gemäß Anspruch 7 hat den zusätzlichen Vorteil, daß durch die dicke unterste Schicht aus Siliziumoxid zusätzlich zur Reflexionsverminderung eine Verbesserung der Oberflächenhärte erreicht wird.

Der erfindungsgemäße reflexionsvermindernde Belag wird vorteilhafterweise bei einem Brillenglas (Anspruch 11) aus einem üblichen organischen Material, z.B. Diethylenglykol- bis -allylcarbonat, Polycarbonat oder PMMA verwendet. Gemäß Anspruch 9 hat dieses organische Material bevorzugterweise einen Brechungsindex von 1,5. Natürlich können auch hochbrechende organische Materialien verwendet werden, wie sie beispielsweise in der DE—A—33 90 081, der EU—A—0 059 561 und der GB—A—2 076 836 beschrieben sind. Die erfindungsgemäß hochbrechende Schicht aus einem der angegebenen Metalloxide kann darüberhinaus auch beispielsweise bei Linsen aus organischem Material für beliebige Verwendungszwecke eingesetzt werden.

Im Anspruch 10 ist nochmals herausgestellt, daß die erfindungsgemäß ausgewählten Metalloxide den Vorteil haben, daß sie nicht reaktiv aufgebracht werden müssen. Darüberhinaus haben sie den weiteren überraschenden Vorteil, daß gut haftende Schichten bei niedrigen Substrattemperaturen hergestellt werden können.

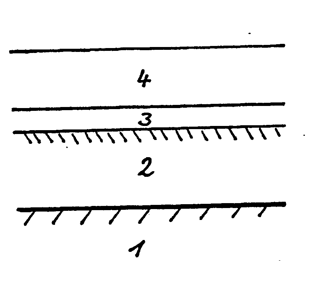

Die Erfindung wird nachstehend anhand eines Ausführungsbeispiels unter Bezugnahme auf die Zeichnung näher beschrieben, deren einzige Figur einen Querschnitt durch einen erfindungsgemäßen Schichtaufbau zeigt.

Auf einem optischen Element 1 aus einem organischen Material, beispielsweise Diethylenglykol- bis -allylcarbonat, Polycarbonat oder PMMA sind drei Schichten 2, 3 und 4 aufgebracht, beispielsweise aufgedampft.

Die unterste direkt auf dem organischen Material 1 aufgebrachte Schicht 2 besteht aus Siliziumdioxid (SiO₂), das einen nahe bei dem Brechungsindex des organischen Materials (n=1,5) liegenden Brechungsindex hat.

Die mittlere Schicht 3 besteht aus einem der vorstehend angegebenen Metalloxide, das einen vergleichsweise hohen Brechungsindex hat, während die oberste Schicht 4 wiederum aus Siliziumdioxid mit einem vergleichsweise niedrigen Brechungsindex besteht.

Bei dem dargestellten bevorzugten Ausführungsbeispiel hat die Schicht 2 eine Dicke von etwa 0,1 bis 5 µm und die Schicht 4 eine Dicke von λ/4. Hierbei ist λ eine "Schwerpunkt"-Wellenlänge des auftreffenden Lichts. Bevorzugt hat die mittlere Schicht 3 aus einem der vorstehend angegebenen Metalloxide eine Dicke von λ/10 bei einer Dicke der untersten Schicht 2 von etwa 2 µm.

Neben dem dargestellten Schichtaufbau sind natürlich noch weitere Modifikationen möglich, beispielsweise können zusätzlich noch Schichten aus anderen hochbrechenden Materialien verwendet werden.

**Patentansprüche**

1. Reflexionsvermindernder Belag aus mehreren Schichten, von denen mindestens eine aus einem Metalloxid (3) besteht, für ein klar durchsichtiges optisches Element (1) aus organischem Material, dadurch gekennzeichnet, daß die mindestens eine Schicht (3) aus Erbiumoxid (Er₂O₃), Terbiumoxid (Tb₄O₇), Dysprosiumoxid (Dy₂O₃) oder Holmiumoxid (Ho₂O₃) besteht.

2. Belag nach Anspruch 1, dadurch gekennzeichnet, daß die mindestens eine Schicht (3) auf einer Schicht (2) aus SiO₂ aufgebracht ist.

3. Belag nach Anspruch 1 oder 2, dadurch gekennzeichnet, daß die direkt auf dem optischen Element (1) aus organischem Material aufgebrachte Schicht (2) aus SiO₂ besteht.

4. Reflexionsvermindernder Belag aus mehreren Schichten für ein klar durchsichtiges optisches Element aus organischem Material, wobei mindestens eine der Schichten aus einem Metalloxid und eine weitere direkt auf dem organischen Material aufgebrachte Schicht aus SiO₂ besteht, gekennzeichnet durch die Kombination folgender Merkmale:

—die direkt auf dem optischen Element (1) aus organischem Material aufgebrachte SiO₂-Schicht (2) hat eine Dicke zwischen 0,1 µm und 5 µm,

—die mindestens eine Schicht (3) besteht aus Samariumoxide ($Sm_2O_3$), Europiumoxid ($Eu_2O_3$), Neodymoxid ($Nd_2O_3$) oder Ytterbiumoxid ($Yb_2O_3$) mit einer Dicke von $\lambda/10$ bis $\lambda/20$ und ist nicht reaktiv auf der SiO₂ Schicht aufgebracht, wobei $\lambda$ eine Schwerpunktwellenlänge des einfallenden Lichts ist.

5. Reflexionsverminderner Belag aus mehreren Schichten für ein klar durchsichtiges optisches Element aus organischem Material wobei mindestens eine der Schichten aus einem Metalloxid und eine weitere direkt auf dem organischen Material aufgebrachte Schicht aus SiO₂ besteht, gekennzeichnet durch die Kombination folgender Merkmale:

—die direkt auf dem optischen Element (1) aus organischem Material aufgebrachte SiO₂-Schicht (2) hat eine Dicke zwischen 0,1 µm und 5 µm,

—die mindestens eine Schicht (3) besteht aus Yttriumoxid ($Y_2O_3$) und ist nicht reaktiv auf der SiO₂ Schicht aufgebracht.

6. Belag nach einem der Ansprüche 1 bis 5, dadurch gekennzeichnet, daß er drei Schichten aufweist, von denen die direkt auf dem optischen Element (1) aus organischem Material aufgebrachte unterste Schicht (2) aus SiO₂, die mittlere Schicht (3) aus $Y_2O_3$, $Sm_2O_3$, $Er_2O_3$, $Eu_2O_3$, $Tb_2O_3$, $D_2O_3$ oder $Nd_2O_3$ und die Schicht (4) aus SiO₂ besteht.

7. Belag nach Anspruch 6, dadurch gekennzeichnet, daß die unterste Schicht (2) eine Dicke von 0,1 bis 5 µm und die oberste Schicht (4) eine Dicke von $\lambda/4$ hat, wobei $\lambda$ eine Schwerpunkt-Wellenlänge des auftreffenden Lichts ist.

8. Belag nach Anspruch 6 oder 7 in Verbindung mit Anspruch 5, dadurch gekennzeichnet, daß die mittlere Schicht (3) eine Dicke von etwa $\lambda/10$ bis $\lambda/20$ bei einer Dicke der untersten Schicht (2) von etwa 2 µm hat.

9. Belag nach einem der Ansprüche 1 bis 8, dadurch gekennzeichnet, daß das organische Material einen Brechungsindex von etwa 1,5 hat.

10. Verfahren zum Herstellen eines Belags nach einem der Ansprüche 1 bis 9, dadurch gekennzeichnet, daß die Schicht aus Samariumoxid, Erbiumoxid, Europiumoxid, Terbiumoxid, Dysprosiumoxid, Neodymoxid und/oder Yttriumoxid nicht reaktiv aufgebracht wird.

11. Verwendung eines Belags nach einem der Ansprüche 1 bis 8 für ein Brillenglas aus einem organischen Material.

**Revendications**

1. Revêtement antiréfléchissant constitué de plusieurs couches, dont au moins l'une est en une oxyde de métal (3), pour un élément optique (1) transparent et limpide, en une matière organique, revêtement caractérisé en ce que l'au moins une couche (3) consiste en de l'oxyde d'erbium ($Er_2O_3$), de l'oxyde de terbium ($Tb_4O_7$), de l'oxyde de dysprosium ($Dy_2O_3$) ou de l'oxyde d'holmium ($Ho_2O_3$).

2. Revêtement selon la revendication 1, caractérisé en ce que l'au moins une couche (3) est appliquée sur une couche (2) en SiO₂.

3. Revêtement selon la revendication 1 ou 2, caractérisé en ce que la couche (2), directement appliquée sur l'élément optique (1) en matière organique, consiste en du SiO₂.

4. Revêtement antiréfléchissant constitué de plusieurs couches pour un élément optique en matière organique, transparent et limpide, une au moins des couches consistant en un oxyde de métal et une autre couche consistant en du SiO₂ appliqué directement sur la matière organique, revêtement caractérisé par la combinaison de particularités suivantes:

—la couche (2) en SiO₂, appliquée directement sur l'élément optique (1) en matière organique, a une épaisseur comprise entre 0,1 µm et 5 µm,

—l'au moins une couche (3) consiste en de l'oxyde de samarium ($Sm_2O_3$), l'oxyde d'europium ($Eu_2O_3$), l'oxyde de néodyme ($Nd_2O_3$) ou l'oxyde d'ytterbium ($Yb_2O_3$) ayant une épaisseur de $\lambda/10$ à $\lambda/20$, et elle n'est pas appliquée de manière réactive sur la couche de SiO₂, $\lambda$ désignant la longueur d'onde barycentrique de la lumière incidente.

5. Revêtement antiréfléchissant constitué de plusieurs couches pour un élément optique, transparent et limpide, en matière organique, au moins une des couches consistant en un oxyde de métal et une autre couche, appliquée directement sur la matière organique, consistant en SiO₂, revêtement caractérisé par la combinaison des particularités suivantes:

—la couche (2) de SiO₂, appliquée directement sur l'élément optique (1) en une matière organique, a une épaisseur comprise entre 0,1 µm et 5 µm,

—l'au moins une couche (3) consiste en de l'oxyde d'yttrium ($Y_2O_3$) et elle est appliquée de façon non réactive sur la couche de SiO₂.

6. Revêtement selon l'une des revendications 1 à 5, caractérisé en ce qu'il présente trois couches, dont la couche (2) inférieure, appliquée directement sur l'élément optique (1) en matière organique, est en SiO₂, la couche intermédiaire (3) consiste en $Y_2O_3$, $Sm_2O_3$, $Er_2O_3$, $Eu_2O_3$, $Tb_2O_3$, $D_2O_3$ ou $Nd_2O_3$, et la couche (4) consiste en SiO₂.

7. Revêtement selon la revendication 6, caractérisé en ce que la couche (2) inférieure a une épaisseur de 0,1 à 5 µm et la couche supérieure (4) a une épaisseur de $\lambda/4$, où $\lambda$ représente une longueur d'onde "barycentrique" de la lumière incidente.

8. Revêtement selon la revendication 6 ou 7, en liaison avec la revendication 5, caractérisé en ce que la couche intermédiaire (3) a une épaisseur d'environ $\lambda/10$ à $\lambda/20$ pour une épaisseur de la couche (2) (la plus) inférieure d'environ 2 µm.

9. Revêtement selon l'une des revendications 1 à 8, caractérisé en ce que la matière organique a un indice de réfraction d'environ 1,5.

10. Procédé pour préparer un revêtement selon l'une des revendications 1 à 9, caractérisé en ce que l'on applique, par un processus non réactif, la couche en oxyde de samarium, en oxyde d'erbium, en oxyde d'europium, en oxyde de terbium, en oxyde de dysprosium, en oxyde de néodyme et/ou en oxyde d'yttrium.

11. Utilisation d'un revêtement selon l'une des revendications 1 à 8 pour un verre de lunettes en une matière organique.

## Claims

1. Anti-reflection film comprising multiple layers of which at least one consists of a metallic oxide (3) for a clearly transparent optical element (1) consisting of an organic material, characterized by the fact that the at least one layer (3) consists of erbium oxide ($Er_2O_3$), terbium oxide ($Tb_4O_7$), dysprosium oxide ($Dy_2O_3$) or holmium oxide ($Ho_2O_3$).

2. Film according to claim 1, characterized by the fact that the at least one layer (3) is deposited on a layer (2) consisting of $SiO_2$.

3. Film according to claim 1 or 2, characterized by the fact that the layer (2) deposited directly on the optical element (1) consisting of an organic material consists of $SiO_2$.

4. Anti-reflection film comprising multiple layers of which at least one consists of a metallic oxide and a further layer applied directly to the organic element consists of $SiO_2$, characterized by the fact that the at least one layer (3) consists of samarium oxide ($Sm_2O_3$), europium oxide ($Eu_2O_3$), neodymium oxide ($Nd_2O_3$) or ytterbium oxide ($Yb_2O_3$) with a thickness of $\lambda/10$ to $\lambda/20$ and is applied to the $SiO_2$ layer in a non-reactive process, where $\lambda$ is a centre of gravity wavelength of the incident light.

5. Anti-reflection film comprising multiple layers for a clearly transparent optical element consisting of an organic material where at least one of the layers consists of a metallic oxide and a further layer deposited directly on the organic material consists of $SiO_2$, characterized by the combination of the following features:

—the $SiO_2$ layer (2) deposited directly on the optical element (1) consisting of an organic material has a thickness of between 0.1 µ and 5 µm,

—the at least one layer (3) consists of yttrium oxide ($Y_2O_3$) and is applied to the $SiO_2$ layer non-reactively.

6. Film according to any one of claims 1 to 5, characterized by the fact that it comprises three layers of which the first layer (2) deposited directly on the optical element (1) consisting of an organic material consists of $SiO_2$, the middle layer (3) consists of $Y_2O_3$, $Sm_2O_3$, $Er_2O_3$, $Eu_2O_3$, $Tb_2O_3$, $D_2O_3$ or $Nd_2O_3$ and the layer (4) of $SiO_2$.

7. Film according to claim 6, characterized by the fact that the first layer (2) possesses a thickness of 0.1 to 5 µm and the uppermost layer (4) a thickness of $\lambda/4$, where $\lambda$ is a centre-of-gravity wavelength of the incident light.

8. Film according to claim 6 or 7 in connection with claim 5, characterized by the fact that the middle layer (3) has a thickness of about $\lambda/10$ to $\lambda/20$ when the first layer (2) has a thickness of about 2 µm.

9. Film according to any one of the claims 1 to 8, characterized by the fact that the organic material has a refractive index of about 1.5.

10. Process for the manufacture of a film according to any one of the claims 1 to 9, characterized by the fact that the layer consisting of samarium oxide, erbium oxide, europium oxide, terbium oxide, dysprosium oxide, neodymium oxide and/or yttrium oxide is deposited non-reactively.

11. Use of a film according to any one of the claims 1 to 8 for a spectacle lens consisting of an organic material.

4

3

2

1